# EUROPÄISCHE PATENTSCHRIFT

(11) **EP 3 383 689 B1**
(45) Veröffentlichungstag und Bekanntmachung des Hinweises auf die Patenterteilung: **07.08.2019**
(21) Anmeldenummer: 16790355.8
(22) Anmeldetag: 02.11.2016
(51) Int. Cl.: B60K 35/00, B60K 37/04, B60R 11/00, B60R 11/02, G06F 1/16, G09F 9/30

(54) **VORRICHTUNG ZUR ANORDNUNG IN EINEM KRAFTFAHRZEUG, KRAFTFAHRZEUG MIT EINER VORRICHTUNG UND VERFAHREN ZUM BETREIBEN EINER VORRICHTUNG**
DEVICE FOR ARRANGING IN A MOTOR VEHICLE, MOTOR VEHICLE HAVING A DEVICE, AND METHOD FOR OPERATING A DEVICE
DISPOSITIF DESTINÉ À ÊTRE DISPOSÉ DANS UN VÉHICULE AUTOMOBILE, VÉHICULE AUTOMOBILE DOTÉ D'UN DISPOSITIF ET PROCÉDÉ DE FONCTIONNEMENT D'UN DISPOSITIF

(30) Priorität: 03.12.2015 DE 102015015630
(43) Veröffentlichungstag der Anmeldung: 10.10.2018
(73) Patentinhaber: Audi AG, 85045 Ingolstadt (DE)
(72) Erfinder: WUNDERLICH, Matthias, 85053 Ingolstadt (DE)
(86) Internationale Anmeldenummer: PCT/EP2016/076418
(87) Internationale Veröffentlichungsnummer: WO 2017/092952

(56) Entgegenhaltungen:
- EP-A1- 1 637 387
- GB-A- 2 503 337
- US-A1- 2014 099 479
- US-A1- 2014 380 186

## Beschreibung

Die Erfindung betrifft eine Vorrichtung zur Anordnung in einem Kraftfahrzeug, mit einer zur Darstellung von Objekten ausgebildeten Anzeigeeinrichtung, mit einer Recheneinrichtung zum Steuern der Anzeigeeinrichtung und mit einer Verstaueinheit, in welche ein erster Endbereich der Anzeigeeinrichtung eingeführt ist, wobei in einer Verstaustellung der Anzeigeeinrichtung die gesamte Anzeigeeinrichtung in der Verstaueinheit eingeführt ist und ausgehend von der Verstaustellung ein Nutzbereich der Anzeigeeinrichtung um eine vorgebbare Gebrauchsstrecke aus der Verstaueinheit ausfahrbahr ist. Weitere Aspekte der Erfindung betreffen ein Kraftfahrzeug mit einer solchen Vorrichtung sowie ein Verfahren zum Betreiben einer solchen Vorrichtung.

Der Einsatz derartiger Vorrichtungen ist im Automobilbereich beispielsweise zur Informationsdarstellung und Aufbereitung für Fahrzeuginsassen weit verbreitet.

Aus der DE 101 15 050 A1 ist eine Anzeigevorrichtung mit einem Display bekannt, wobei das Display auf dessen Rückseite eine Tragstruktur in Form eines flexiblen Gerüsts aufweist. Das Display kann in einem "Parkzustand" zwischen zwei Blechelementen aufbewahrt und durch selbige geschützt werden, wobei die Blechelemente einen Kanal definieren. Das Display ist dabei flexibel und kann mittels einer selbstaufrollenden Spule aus dem Kanal ausgefahren und in eine eindeutig vorgegebene Position gebracht werden. In dieser eindeutig vorgegebenen Position wird das Display mittels einer Mehrzahl von aneinandergereihten Strukturelementen des Gerüsts gehalten.

Aus der EP 1 637 387 A1 ist eine Anzeigevorrichtung für ein Fahrzeug bekannt, welche ein sogenanntes elektronisches Papier zur Darstellung von Informationen umfasst. Das elektronische Papier ist in einer Hülse aufrollbar und mittels eines auf der Rückseite des elektronischen Papiers angeordneten Scherengitters derart fixiert, dass das elektronische Papier eine im Wesentlichen eben Oberfläche aufweist.

Ein Handschuhfach mit Bildschirm ist aus der DE 10 2010 047 625 A1 bekannt. Das Handschuhfach ist unterhalb einer Instrumententafel eines Kraftfahrzeugs ausgebildet und umfasst eine bewegbare Klappe zum Öffnen und Schließen des Handschuhfachs. In die bewegbare Klappe ist dabei ein Bildschirm integriert, welcher aus der Klappe ausfahrbar ist.

Weiterhin ist auch die US2014380186 A1 relevant.

Aufgabe der vorliegenden Erfindung ist es, eine Vorrichtung sowie ein Kraftfahrzeug der eingangs genannten Art zu schaffen, welche eine besonders hohe Funktionalität aufweisen und ein Verfahren zum Betreiben einer solchen Vorrichtung bereitzustellen.

Diese Aufgabe wird durch eine Vorrichtung gemäß Patentanspruch 1, durch ein Kraftfahrzeug mit einer Vorrichtung gemäß Patentanspruch 6 sowie durch ein Verfahren gemäß Patentanspruch 9 gelöst. Vorteilhafte Weiterbildungen der Erfindung sind durch die Unteransprüche gegeben.

Die Erfindung geht von einer Vorrichtung zur Anordnung in einem Kraftfahrzeug aus. Zu der Vorrichtung gehört eine zur Darstellung von Objekten ausgebildete Anzeigeeinrichtung, eine Recheneinrichtung zum Steuern der Anzeigeeinrichtung und eine Verstaueinheit, in welcher ein erster Endbereich der Anzeigeeinrichtung eingeführt ist, wobei in einer Verstaustellung der Anzeigeeinrichtung die gesamte Anzeigeeinrichtung in der Verstaueinheit eingeführt ist und ausgehend von der Verstaustellung ein Nutzbereich der Anzeigeeinrichtung um eine vorgebbare Gebrauchsstrecke aus der Verstaueinheit ausfahrbar ist.

Die besagten Objekte können beispielsweise Icons oder Grafikelemente, wie beispielsweise virtuelle Ölstandsanzeiger oder Verschleißanzeigen von Betriebsbremsen eines Kraftfahrzeugs sein, um nur einige Beispiele zu nennen. Die besagte Anzeigeeinrichtung kann beispielsweise als flexibles Display ausgebildet sein. Der besagte Nutzbereich der Anzeigeeinrichtung kann beispielsweise ein Bereich der Anzeigeeinrichtung sein, auf welchen in einer von der Verstaustellung verschiedenen Stellung eine freie und ungehinderte Sicht von Fahrzeuginsassen auf die Anzeigeeinrichtung besteht.

Erfindungsgemäß ist vorgesehen, dass die Anzeigeeinrichtung bei unterschiedlichen Längenwerten der Gebrauchsstrecke arretiertbar ist, so dass sich eine Mehrzahl von unterschiedlichen Gebrauchsstellungen ergibt, und die Recheneinrichtung dazu ausgebildet ist, die Darstellung der Objekte in Abhängigkeit von dem aktuellen Längenwert der Gebrauchsstrecke einzustellen.

Die Anzeigeeinrichtung ist somit in mehreren verschiedenen Gebrauchsstellungen arretierbar, wobei es auch möglich ist, die Anzeigeeinrichtung lediglich teilweise aus der Verstaueinheit auszufahren und somit lediglich einen Teil eines Maximalnutzbereichs als Nutzbereich der Anzeigeeinrichtung zur Betrachtung durch die Fahrzeuginsassen freizugeben. Der Maximalnutzbereich kann dabei demjenigen Nutzbereich entsprechen, bei welchem die Anzeigeeinrichtung im Rahmen ihrer kinematischen Grenzen maximal aus der Verstaueinheit ausgefahren ist. Den verschiedenen Gebrauchsstellungen könne jeweils unterschiedlich große Darstellungsflächen des Nutzbereichs zugeordnet sein. Dementsprechend ist es beispielsweise möglich, dass in einer ersten Gebrauchsstellung die Anzeigeeinrichtung lediglich zu 75 % aus der Verstaueinheit ausgefahren ist und dementsprechend ein kleinerer Nutzbereich zur Darstellung der Objekte verfügbar ist, als bei maximal ausgefahrener Anzeigeeinrichtung. Die unterschiedlichen Längenwerte der Gebrauchsstrecke können dementsprechend den jeweils unterschiedlichen Gebrauchsstellungen zugeordnet sein. Mit anderen Worten kann dabei jeweils ein Längenwert der Gebrauchsstrecke jeweils einer dazugehörigen Gebrauchsstellung zugeordnet sein. Je nachdem wie groß der Nutzbereich und demzufolge der dazugehörige Längenwert der Gebrauchsstrecke eingestellt wird, stellt die Recheneinrichtung die Darstellung der Objekte in Abhängigkeit von dem aktuellen Längenwert der Gebrauchsstrecke ein. Dies hat den Vorteil, dass die Anzeigeeinrichtung zur Darstellung von derartigen Objekten, welche lediglich einen geringen Platzbedarf benötigen, lediglich teilweise aus der Verstaueinheit auszufahren ist und somit als eine der Gebrauchsstellungen auch eine Zwischenstellung zwischen einer maximal ausgefahrenen Gebrauchsstellung und der Verstaustellung einstellbar ist. Bei dieser Zwischenstellung kann die Vorrichtung besonders kompakt im Kraftfahrzeug angeordnet sein und lediglich einen kleinen Bereich verdecken, so dass beispielsweise eine Sicht auf hinter der Vorrichtung liegende Bereiche des Kraftfahrzeugs in dieser Zwischenstellung (als eine der Gebrauchsstellung) nur in einem kleinen Bereich blockiert wird. Dies ermöglicht ein besonders effizientes Nutzen des in einem Kraftfahrzeug verfügbaren Bauraums.

In einer vorteilhaften Ausgestaltung der Erfindung umfasst die Verstaueinheit ein erstes Verstauelement, in welches der erste Endbereich der Anzeigeeinrichtung wenigstens bereichsweise eingeführt ist, sowie ein zweites Verstauelement, in welchem ein dem ersten Endbereich gegenüberliegender, zweiter Endbereich der Anzeigeeinrichtung eingeführt ist, wobei zum Ausfahren des Nutzbereichs die beiden Verstauelemente auseinanderbewegbar sind. Der erste Endbereich kann in dem ersten Verstauelement bewegbar und der zweite Endbereich in dem zweiten Verstauelement bewegbar angeordnet sein. Der erste Endbereich kann dabei beispielsweise ein oberes Ende der Anzeigeeinrichtung und damit beispielsweise einen oberen Randbereich darstellen und der zweite Endbereich ein dazu gegenüberliegendes unteres Ende und dementsprechend einen unteren Randbereich der Anzeigeeinrichtung. Der erste Endbereich und der zweite Endbereich können sich beispielsweise jeweils bis zur Mitte der Anzeigeeinrichtung erstrecken und damit jeweils die Hälfte der Anzeigeeinrichtung einnehmen. Zum Ausfahren des Nutzbereichs können beide Verstauelemente auseinander bewegt werden. Selbstverständlich ist es alternativ dazu auch möglich, dass lediglich eines der Verstauelemente bewegt wird, wohingegen das jeweils andere Verstauelement in Position gehalten wird. Durch die Möglichkeit beide Verstauelemente zu bewegen kann die Verstaueinheit besonders bedarfsgerecht bedient werden, wodurch die Funktionalität der gesamten Vorrichtung erhöht wird.

In einer weiteren vorteilhaften Ausgestaltung der Erfindung ist der erste Endbereich und/oder der zweite Endbereich als jeweiliges freies Ende der Anzeigeeinrichtung in dem jeweiligen Verstauelement aufgenommen. Mit anderen Worten kann der erste Endbereich und zusätzlich oder alternativ der zweite Endbereich als jeweiliges freies Ende der Anzeigeeinrichtung in dem jeweiligen Verstauelement aufgenommen und dort bewegbar gelagert sein. Durch das Aufnehmen zumindest eines der Endbereiche als freies Ende der Anzeigeeinrichtung in dem jeweiligen Verstauelement kann auf etwaige Aufwickelvorrichtungen, wie beispielsweise Wickelrollen, verzichtet werden. Dadurch kann Gewicht gespart werden.

In einer weiteren vorteilhaften Ausgestaltung der Erfindung ist die Anzeigeeinrichtung flexibel ausgebildet und in der Verstaustellung gekrümmt in der Verstaueinheit eingeführt. Die Anzeigeeinrichtung kann dabei vollständig, also mit anderen Worten an beiden Endbereichen sowie an deren Nutzbereich gekrümmt und in der Verstaustellung in die Verstaueinheit eingeführt sein. Durch die flexible Ausgestaltung und vollständige Krümmbarkeit der Anzeigeeinrichtung, welche beispielsweise als OLED oder als elektronisches Papier ausgebildet sein kann, kann die Anzeigeeinrichtung in der Verstaustellung auf besonders geringem Raum aufbewahrt und in der Verstaueinheit eingeführt sein. Durch das Krümmen der Anzeigeeinrichtung kann ein in der Verstaueinheit verfügbarer Verstauraum bzw. können in den einzelnen Verstauelementen verfügbare Räume besonders effizient genutzt werden. Dies erlaubt eine besonders kompakte und platzsparende Anordnung der Anzeigeeinrichtung, in der Verstaustellung.

In einer weiteren vorteilhaften Ausgestaltung der Erfindung ist die Anzeigeeinrichtung mittels einer Hinterhakung oder mittels einer magnetischen Aufnahme oder mittels eines Klettverschlusses arretierbar. Durch das Arretieren der Anzeigeeinrichtung mittels einer derartigen Hinterhakung, magnetischen Aufnahme oder eines Klettverschlusses ist die Anzeigeeinrichtung besonders leicht manuell lösbar und dementsprechend einfach und zuverlässig zwischen der Verstaustellung und der Mehrzahl an unterschiedlichen Gebrauchsstellungen verstellbar.

Erfindungsgemäß ist die Vorrichtung an einer Halteeinheit des Kraftfahrzeugs aufgenommen. Gemäß der Erfindung ist die Vorrichtung relativ zu der Halteeinheit bewegbar an dieser aufgenommen. Die Halteeinheit kann beispielsweise als Mittelkonsole des besagten Kraftfahrzeugs ausgebildet sein. Die ganze Vorrichtung kann relativ zu dieser Halteeinheit und entlang der Halteeinheit bewegbar an dieser aufgenommen sein. Dadurch kann die Vorrichtung nicht nur zwischen den verschiedenen Gebrauchsstellungen und der Verstaustellung verstellt werden, sondern in ihrer Gesamtheit relativ zu der Halteeinheit und entlang dieser bewegt werden. Dabei können auch beide Verstauelemente relativ zu der Halteeinheit bewegt werden. Dadurch sind hinter der Vorrichtung angeordnete Bedienelemente des Kraftfahrzeugs besonders leicht zugänglich.

In einer weiteren vorteilhaften Ausführungsform der Erfindung ist das erste Verstauelement der Verstaueinheit und/oder das zweite Verstauelement der Verstaueinheit lösbar an der Halteeinheit gehalten und die Anzeigeeinrichtung ist derart flexibel ausgestaltet, dass der ausgefahrene Nutzbereich bei abgelöstem Verstauelement zerstörungsfrei verdrillbar ist. Dadurch wird die Funktionalität der Vorrichtung in besonderem Maße gesteigert, zumal durch die Möglichkeit des Verdrillens der Anzeigeeinrichtung ein wenigstens bereichsweises Neigen oder ein Schwenken der Anzeigeeinrichtung in Richtung eines bestimmten Fahrzeuginsassen ermöglicht ist. So kann beispielsweise ein erstes Elementende eines der Verstauelemente an der Halteeinheit arretiert bleiben, wohingegen ein zweites Elementende des entsprechenden Verstauelements von der Halteeinheit abgelöst und um eine Arretierstelle des ersten Elementendes verschwenkt wird, wobei dadurch die Anzeigeeinrichtung zumindest bereichsweise verdrillt wird. Dadurch ist es möglich, die Anzeigeeinrichtung zumindest bereichsweise in Richtung eines bestimmten Fahrzeuginsassen zu verschwenken und dabei zu verdrillen.

Erfindungsgemäß ist der ausgefahrene Nutzbereich der Anzeigeeinrichtung in jeder der Gebrauchsstellungen entlang einer der Anzeigeeinrichtung zugewandten Kontur der Halteeinheit ausgerichtet. Dementsprechend kann beispielsweise eine Nutzbereichkrümmung des Nutzbereichs an eine Konturkrümmung der Kontur angepasst sein. Dadurch benötigt die Anzeigeeinrichtung in jeder der Gebrauchsstellungen besonders wenig Platz.

Ein weiterer Aspekt der Erfindung betrifft ein Verfahren zum Betreiben einer derartigen Vorrichtung. Gemäß der Erfindung stellt die Recheneinrichtung die Darstellung der Objekte in Abhängigkeit von dem aktuellen Längenwert der Gebrauchsstrecke ein. Dies ermöglicht eine besonders einfache Bedienung der Vorrichtung und gleichzeitig eine besonders situationsadäquate Darstellung der Objekte, wodurch jederzeit und automatisch eine besonders gute Erkennbarkeit der Objekte durch Fahrzeuginsassen gewährleistet ist.

In einer weiteren vorteilhaften Ausgestaltung der Erfindung stellt die Recheneinrichtung ein Format der Darstellung in Abhängigkeit von dem aktuellen Längenwert der Gebrauchsstrecke ein. Bei der Einstellung des Formats wird beispielsweise eine Größe der Darstellung der Objekte in Abhängigkeit von dem aktuellen Längenwert angepasst. Dadurch ist stets eine optimale Darstellung der Objekte sichergestellt.

Die in Bezug auf die Vorrichtung vorgestellten, bevorzugten Ausführungsformen und deren Vorteile gelten entsprechend für das erfindungsgemäße Kraftfahrzeug sowie das erfindungsgemäße Verfahren und umgekehrt.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen.

Im Folgenden ist die Erfindung noch einmal anhand eines konkreten Ausführungsbeispiels erläutert. Hierzu zeigt:
- Fig. 1: ein aus dem Stand der Technik bekanntes Displaymodul, welches an einem Armaturenbrett eines Fahrzeugs angeordnet ist;
- Fig. 2a: eine Perspektivansicht auf eine für die Erfindung beispielhafte Ausführungsform einer nicht-erfindungsgemäßen Vorrichtung;
- Fig. 2b: eine Schnittansicht der in Fig. 2a gezeigten Vorrichtung, wobei eine Anzeigeeinrichtung in einer Verstaustellung in einer Verstaueinheit der Vorrichtung aufgenommen ist;
- Fig. 3a: eine weitere Perspektivansicht auf die Vorrichtung, wobei sich eine Anzeigeeinrichtung der Vorrichtung in einer Gebrauchsstellung befindet, in welcher ein Nutzbereich der Anzeigeeinrichtung für Fahrzeuginsassen sichtbar ist;
- Fig. 3b: eine Schnittansicht der in Fig. 3a dargestellten Vorrichtung;
- Fig. 4a: eine Schnittansicht einer Halteeinheit eines erfindungsgemäßen Kraftfahrzeugs, wobei die Vorrichtung relativ zu der Halteeinheit bewegbar an dieser aufgenommen ist; und
- Fig. 4b: eine weitere Schnittansicht der Halteeinheit, wobei ein Verstauelement der Verstaueinheit bereichsweise von der Halteeinheit abgelöst und die Anzeigeeinrichtung dadurch in deren Gebrauchsstellung bereichsweise verdrillt ist.

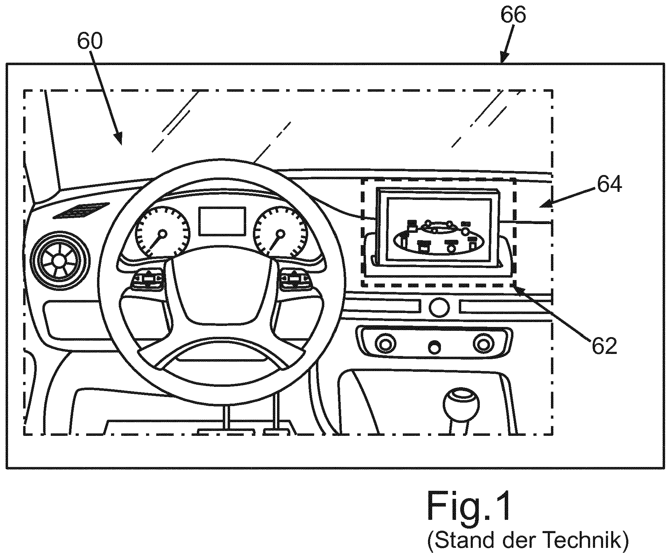

Fig. 1 zeigt eine aus dem Stand der Technik bekannte Anordnung eines Displaymoduls 64 in einem Cockpit 60 eines Fahrzeugs 66. Das Displaymodul 64 ist dabei fest in einem Armaturenbrett 62 installiert und üblicherweise zwischen einer Nichtgebrauchsstellung und einer Gebrauchsstellung bewegbar. Aufgrund der festen Installation ist für das Displaymodul 64 ein vergleichsweise großer Bauraum vorzuhalten.

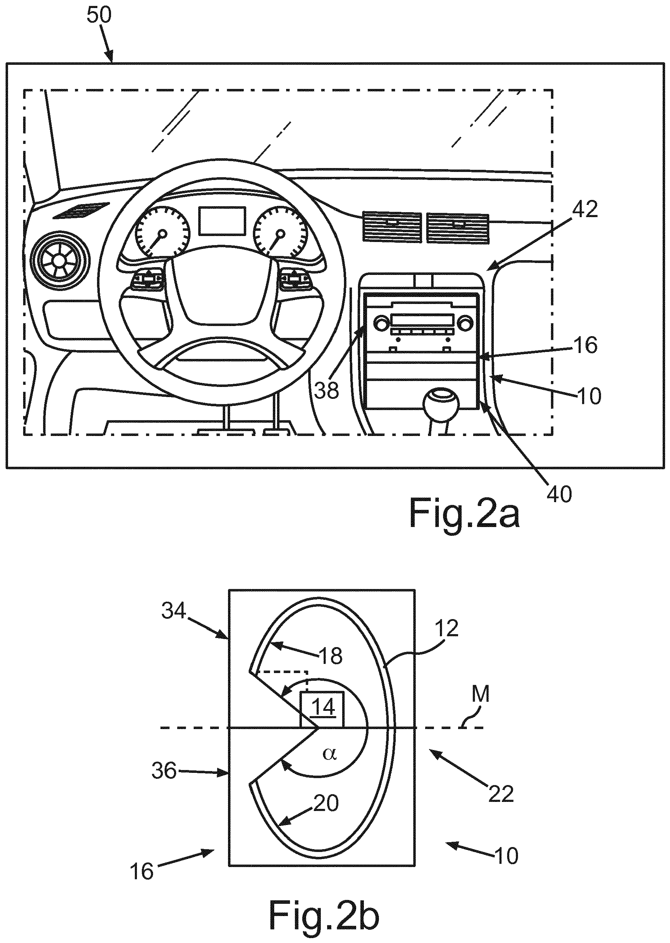

Fig. 2a zeigt eine Ausführungsform einer Vorrichtung 10 von welcher in Fig. 2a lediglich eine Verstaueinheit 16 sowie jeweilige, als Führungsbahnen oder Führungsschienen ausgebildete Arretiermittel 38, 40, erkennbar sind. Die Vorrichtung 10 ist vorliegend an einer als Mittelkonsole ausgebildeten Halteeinheit 42 eines Kraftfahrzeugs 50 angeordnet.

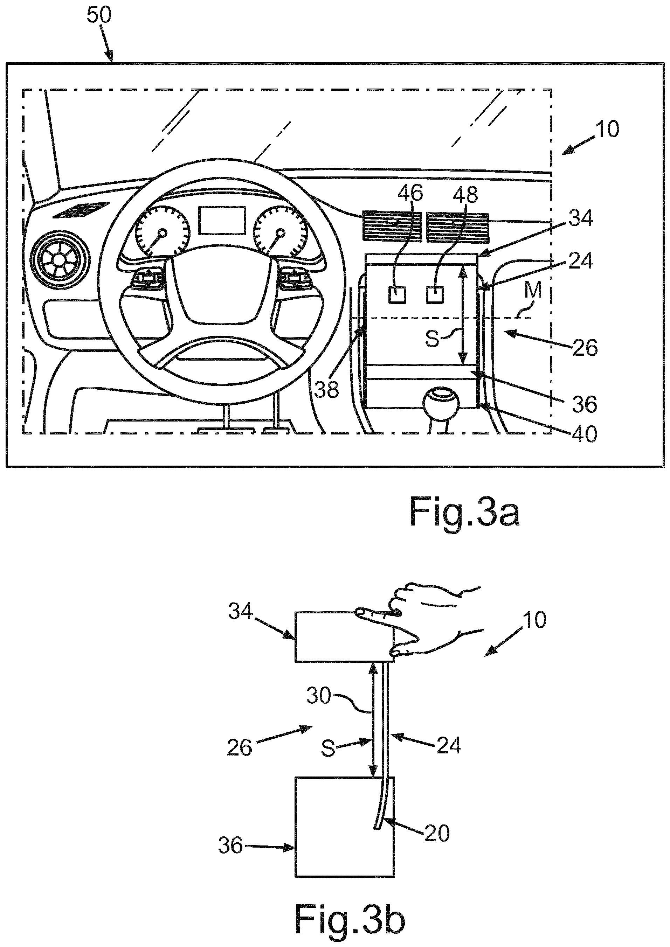

Fig. 2b zeigt eine Schnittansicht durch die in Fig. 2a dargestellte Verstaueinheit, wobei erkennbar ist, dass die Vorrichtung 10 eine Anzeigeeinrichtung 12 sowie eine im vorliegenden Ausführungsbeispiel in die Verstaueinheit 16 integrierte Recheneinrichtung 14 zum Steuern der Anzeigeeinrichtung 12 umfasst. Die Anzeigeeinrichtung 12 dient zur Darstellung einer Vielzahl von Objekten, wie beispielsweise Icons, Grafikelementen, virtuellen Ölstandsanzeigern oder anderen Verschleißanzeigen, um nur einige zu nennen. In Fig. 3a sind lediglich exemplarisch zwei dieser Objekte 46, 48 auf der Anzeigeeinrichtung 12 dargestellt.

Wie weiterhin in Fig. 2b erkennbar ist, ist in die Verstaueinheit 16 ein erster Endbereich 18 sowie ein zweiter Endbereich 20 der Anzeigeeinrichtung 12 in einer Verstaustellung 22 der Anzeigeinrichtung 12 eingeführt. In dieser Verstaustellung 22 der Anzeigeeinrichtung 12 ist die gesamte Anzeigeeinrichtung 12 in der Verstaueinheit 16 eingeführt.

Die Verstaueinheit 16 umfasst vorliegend ein erstes Verstauelement 34, in welchem der erste Endbereich 18 der Anzeigeeinrichtung 12 wenigstens bereichsweise eingeführt ist, sowie ein zweites Verstauelement 36, in welchem der dem ersten Endbereich 18 gegenüberliegende, zweite Endbereich 20 der Anzeigeeinrichtung 12 eingeführt ist. Der erste Endbereich 18 und zusätzlich oder alternativ der zweite Endbereich 20 sind als jeweiliges freies Ende der Anzeigeeinrichtung 12 in dem jeweiligen Verstauelement 34, 36 aufgenommen. Wie in Fig. 2b des Weiteren erkennbar ist, ist die Anzeigeeinrichtung 12 in deren Verstaustellung 22 symmetrisch zu einer Mittelebene M in der Verstaueinheit 16 aufgenommen. Die Mittelebene M ist vorliegend gestrichelt gezeigt. Die Symmetrie der Anzeigeeinrichtung 12 ist dadurch gegeben, dass die Endbereiche 18, 20 in der Verstaustellung 22 in Bezug auf die Symmetrieebene M eine zueinander symmetrische Krümmung aufweisen. Die Recheneinrichtung 14 ist hierbei besonders platzsparend in einem der Verstauelemente 34, 36 angeordnet (hier: im ersten Verstauelement 34), wobei die Recheneinrichtung 14 in der Verstaustellung 22 nahezu vollständig von der Anzeigeeinrichtung 12 umschlossen ist. Im in Fig. 2b gezeigten Ausführungsbeispiel kann sich dabei ein Umschließungswinkel α von vorzugsweise einem Bereich zwischen 200° bis zu 360° ergeben, wobei sich die beiden Endbereiche 18, 20 bei einem Umschließungswinkel von α=360° gegenseitig berühren. Dabei ist klar, dass die Größe des Umschließungswinkels einerseits von der Größe der Anzeigeeinrichtung 12 und dem zum Verstauen der Anzeigeeinrichtung 12 in der Verstaueinheit 16 bzw. in den einzelnen Verstauelementen 34, 36 verfügbaren Raum abhängt. Die Anzeigeeinrichtung 12 ist vorliegend als flexible OLED ausgebildet und in der Verstaustellung 22 gekrümmt in der Verstaueinheit 16 eingeführt. Alternativ dazu kann die Anzeigeeinrichtung 12 auch als sogenanntes elektronisches Papier (e-ink-paper) ausgebildet sein.

Fig. 3a zeigt die Vorrichtung 10 in einer ersten Gebrauchsstellung 26 und damit in einer von der Verstaustellung 22 verschiedenen Stellung, in welcher ein Nutzbereich 24 der Anzeigeeinrichtung 12 um eine vorgebbare Gebrauchsstrecke S aus der Verstaueinheit 16 ausgefahren ist. Zum Ausfahren des Nutzbereichs 24 (und damit zum Bewegen der Anzeigeeinrichtung 12 in die erste Gebrauchsstellung 26, in welcher eine freie Sicht auf den Nutzbereich 24 durch jeweilige Fahrzeuginsassen gegeben ist) wurden die beiden Verstauelemente 34, 36 hierbei ausgehend von der in Fig. 2b gezeigten Verstaustellung 22 auseinander bewegt. Infolgedessen wurden die beiden Endbereiche 18, 20 im vorliegenden Ausführungsbeispiel zu jeweils gleichen Teilen aus den jeweiligen Verstauelementen 34, 36 herausgezogen, wodurch der Nutzbereich 24 vorliegend symmetrisch zu der in Fig. 3a gezeigten Symmetrieebene M ist. Aufgrund der Symmetrie des Nutzbereichs 24 zu der Symmetrieebene M sind auch etwaige Krümmungen des Nutzbereichs 24 und damit der Anzeigeeinrichtung 12 symmetrisch in Bezug auf die Symmetrieebene M, wodurch sich eine gleichmäßige Spannung in der Anzeigeeinrichtung 12 einstellt. Aufgrund dieser gleichmäßigen (symmetrisch verteilten) Spannung kann die Anzeigeeinrichtung 12 insbesondere im Vergleich zu beispielsweise lediglich einseitig gekrümmten Displays, wie sie aus dem Stand der Technik bekannt sind, eine erhöhte Lebensdauer aufweisen.

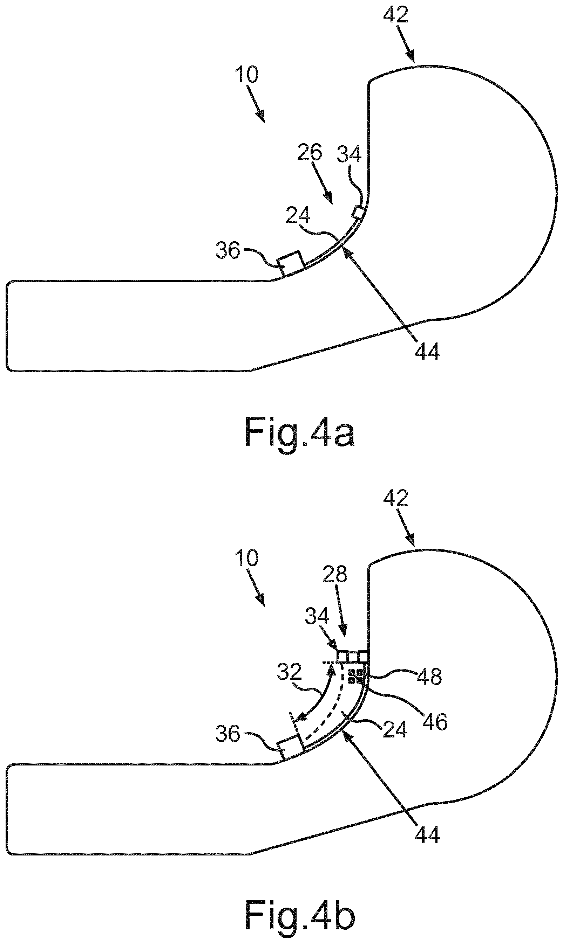

Die Anzeigeeinrichtung 12 ist, wie aus der Zusammenschau der Fig. 3b und Fig. 4b erkennbar ist, bei unterschiedlichen Längenwerten 30, 32 der Gebrauchsstrecke S arretierbar, so dass sich eine Mehrzahl von unterschiedlichen Gebrauchsstellungen 26, 28 ergibt. Die Recheneinrichtung 14 ist dazu ausgebildet, die Darstellung der Objekte 46, 48 in Abhängigkeit von dem aktuellen Längenwert 30, 32 der Gebrauchsstrecke S einzustellen. Im vorliegenden Ausführungsbeispiel sind mit den Objekten 46, 48 exemplarisch und aus Gründen der Übersicht lediglich zwei Objekte dargestellt, wobei jedoch klar ist, dass die Recheneinrichtung 14 auch dazu ausgebildet ist, die Darstellung einer Vielzahl von Objekten in Abhängigkeit von dem aktuellen Längenwert 30, 32 der Gebrauchsstrecke S einzustellen.

In Fig. 3b ist der erste Längenwert 30 der Gebrauchsstrecke S und damit des Nutzbereichs 24 entlang einer Geraden bemessen, wohingegen in Fig. 4b der zweite Längenwert 32 der dortigen Gebrauchsstrecke S in einem Bogen bemessen ist.

Aus der Zusammenschau der Fig. 4a und Fig. 4b geht hervor, dass die Vorrichtung 10 relativ zu der Halteeinheit 42 bewegbar an dieser aufgenommen ist. Die Anzeigeeinrichtung 12 kann mittels der lediglich in Fig. 2a schematisch gezeigten Arretiermittel 38, 40 arretiert werden. Die Arretiermittel 38, 40 können dabei als magnetische Aufnahme ausgebildet sein oder als Hinterhakung oder als Klettverschluss, wobei an den Arretiermitteln 38, 40 die Verstaueinheit 16 und damit das erste Verstauelement 34 und das zweite Verstauelement 36 bewegbar an der Halteeinheit 42 arretiert werden können. Das erste Verstauelement 34 der Verstaueinheit 16 und zusätzlich oder alternativ das zweite Verstauelement 36 der Verstaueinheit 16 sind lösbar an der Halteeinheit 42 gehalten und die Anzeigeeinrichtung 12 ist derart flexibel ausgestaltet, dass der ausgefahrene Nutzbereich 24, wie in Fig. 4b gezeigt, bei abgelöstem Verstauelement 34, 36 zerstörungsfrei verdrillbar ist. Im in Fig. 4b gezeigten Beispiel ist lediglich das erste Verstauelement 34 an einem ersten Elementende des Verstauelements 34 von der Halteeinheit 42 und damit von dem ersten Arretiermittel 38 abgelöst, wohingegen ein zweites Elementende des ersten Verstauelements 34 weiterhin an dem zweiten Arretiermittel 40 arretiert ist. Dies ermöglicht ein zumindest bereichsweises Verschwenken bzw. bereichsweise Verdrillen des Nutzbereichs 24 in Richtung eines bestimmten Fahrzeuginsassen, wodurch die Objekte 46, 48 aus einem günstigeren Sichtwinkel betrachtet werden können, als dies ohne das Verdrillen/Verschwenken der Fall wäre. Es ist jedoch auch möglich, wie in Fig. 4a gezeigt, den ausgefahrenen Nutzbereich 24 der Anzeigeeinrichtung 12 in jeder der Gebrauchsstellungen 26, 28 entlang einer der Anzeigeeinrichtung 12 zugewandten Kontur 44 der Halteeinheit 42 auszurichten, und damit eine Krümmung des Nutzbereichs 24 an eine Konturkrümmung der Kontur 44 der Halteeinheit 42 anzupassen. Dadurch kann die gesamte Vorrichtung 10 besonders platzsparend im Kraftfahrzeug 50 angeordnet werden, selbst wenn eine der verschiedenen Gebrauchsstellung 26, 28 eingestellt ist. Die Recheneinrichtung 14 stellt die Darstellung der Objekte 46, 48 in Abhängigkeit von dem aktuellen Längenwert 30, 32 der Gebrauchsstrecke S ein. Die den jeweiligen Gebrauchsstellungen 26, 28 zugeordneten Längenwerte 30, 32 können sich dabei erheblich voneinander unterscheiden. Je nach verfügbarem Platzangebot zur Darstellung der Objekte 46, 48 auf dem Nutzbereich 24 stellt die Recheneinrichtung 14 ein Format der Darstellung der Objekte 46, 48 in Abhängigkeit von dem Längenwert 30, 32 der Gebrauchsstrecke S ein. Bei der Einstellung des Formats der Darstellung kann die Recheneinrichtung 14 beispielsweise eine Größe der einzelnen Objekte 46, 48, Zeilenumbrüche bei der Objektdarstellung oder dergleichen anpassen.

Im vorliegenden Ausführungsbeispiel ist die Halteeinheit 42 als Mittelkonsole des Kraftfahrzeugs 50 ausgebildet und die Arretiermittel 38, 40 sind über hier nicht weiter dargestellte Führungsschienen mit der Mittelkonsole koppelbar.

Zusammenfassend stellt die vorliegende Erfindung mit der Anzeigeeinrichtung 12 ein ausziehbares, flexibles Display bereit, welches in einem Innenraum (Cockpit) des Kraftfahrzeugs 50 angeordnet werden kann. Das flexible Display (Anzeigeeinrichtung 12) ermöglicht es einem Fahrzeuginsassen das Display ein- bzw. auszurollen und somit zwischen der Verstaustellung 22 und den unterschiedlichen Gebrauchsstellungen 26, 28 zu verstellen, um das Display je nach Benutzerwunsch in einer gewünschten Größe einzustellen, also mit anderen Worten unterschiedliche Längenwerte 30, 32 der Gebrauchsstrecke S vorzugeben, in welchen die Anzeigeeinrichtung 12 an der Halteeinheit 42 arretierbar ist. Im vorliegenden Ausführungsbeispiel ist die Halteeinheit 42 aus der Mittelkonsole und einer Schalttafel des Kraftfahrzeugs 50 gebildet. Die Kontur 44 der Halteeinheit 42 ist dabei vorliegend kreisförmig ausgeführt, so dass das Display (Anzeigeeinrichtung 12) entlang dieser Kontur und dabei in einem Kreisbogen führbar und an diesen Kreisbogen anpassbar ist. Denkbar aber nicht-erfindungsgemäßen ist jedoch auch, die Anzeigeeinrichtung 12 geradlinig herauszuziehen und an den verschiedenen Gebrauchsstellungen 26, 28, welche auch als verschiedene Rastpunkte bezeichnet werden können, abzulegen. Der Fahrzeuginsasse kann die Anzeigeeinrichtung 12 beispielsweise manuell soweit herausziehen, wie es ihm beliebt, also welche Gebrauchsstellung 26, 28 ihm am günstigsten erscheint. Es ist klar, dass auch eine Endstellung, welcher ein maximal möglicher Längenwert der Gebrauchsstrecke S zugeordnet ist, vorhanden ist, wobei in dieser Endstellung der Nutzbereich 24 dementsprechend maximal groß ist. Die Anzeigeeinrichtung 12 kann in der Verstaustellung 22 in der Verstaueinheit 16 in einem zumindest bereichweise aufgerollten Zustand aufbewahrt werden. Um die Anzeigeeinrichtung 12 von der Verstaustellung 22 in eine der Gebrauchsstellungen 26, 28 oder sogar in die Endstellung zu bewegen, kann der Fahrzeuginsasse das erste Verstauelement 34 und zusätzlich oder alternativ das zweite Verstauelement 36 bewegen.

## Patentansprüche

1. Kraftfahrzeug (50) mit einer Vorrichtung (10) zur Anordnung in dem Kraftfahrzeug (50), wobei die Vorrichtung (10)
- eine zur Darstellung von Objekten (46, 48) ausgebildete Anzeigeeinrichtung (12) aufweist,
- eine Recheneinrichtung (14) zum Steuern der Anzeigeeinrichtung (12) aufweist, und
- eine Verstaueinheit (16) aufweist, in welcher ein erster Endbereich (18) der Anzeigeeinrichtung (12) eingeführt ist, wobei in einer Verstaustellung (22) der Anzeigeeinrichtung (12) die gesamte Anzeigeeinrichtung (12) in der Verstaueinheit (16) eingeführt ist und ausgehend von der Verstaustellung (22) ein Nutzbereich (24) der Anzeigeeinrichtung (12) um eine vorgebbare Gebrauchsstrecke (S) aus der Verstaueinheit (16) ausfahrbar ist, wobei
die Anzeigeeinrichtung (12) bei unterschiedlichen Längenwerten (30, 32) der Gebrauchsstrecke (S) arretierbar ist, so dass sich eine Mehrzahl von unterschiedlichen Gebrauchsstellungen (26, 28) ergibt, und die Recheneinrichtung (14) dazu ausgebildet ist, die Darstellung der Objekte (46, 48) in Abhängigkeit von dem aktuellen Längenwert (30, 32) der Gebrauchsstrecke (S) einzustellen, wobei die Vorrichtung (10) an einer Halteeinheit (42) des Kraftfahrzeugs (50) aufgenommen ist und die Vorrichtung (10) relativ zu der Halteeinheit (42) bewegbar an dieser aufgenommen ist,
**dadurch gekennzeichnet, dass**
der ausgefahrene Nutzbereich (24) der Anzeigeeinrichtung (12) in jeder der Gebrauchsstellungen (26, 28) entlang einer der Anzeigeeinrichtung (12) zugewandten Kontur (44) der Halteeinheit (42) ausgerichtet ist, wobei eine Krümmung des Nutzbereichs (24) an eine Konturkrümmung der Kontur (44) der Halteeinheit (42) angepasst wird.

2. Kraftfahrzeug (50) nach Anspruch 1,
**dadurch gekennzeichnet, dass**
die Verstaueinheit (16)
- ein erstes Verstauelement (34), in welches der erste Endbereich (18) der Anzeigeeinrichtung (12) wenigstens bereichsweise eingeführt ist, sowie
- ein zweites Verstauelement (36) umfasst, in welchem ein dem ersten Endbereich (18) gegenüberliegender, zweiter Endbereich (20) der Anzeigeeinrichtung (12) eingeführt ist
- und zum Ausfahren des Nutzbereichs (24) die beiden Verstauelemente (34, 36) auseinanderbewegbar sind.

3. Kraftfahrzeug (50) nach Anspruch 2,
**dadurch gekennzeichnet, dass**
der erste Endbereich (18) und/oder der zweite Endbereich (20) als jeweiliges freies Ende der Anzeigeeinrichtung (12) in dem jeweiligen Verstauelement (34, 36) aufgenommen ist.

4. Kraftfahrzeug (50) nach einem der vorhergehenden Ansprüche,
**dadurch gekennzeichnet, dass**
die Anzeigeeinrichtung (12) flexibel ausgebildet und in der Verstaustellung (22) gekrümmt in der Verstaueinheit (16) eingeführt ist.

5. Kraftfahrzeug (50) nach einem der vorhergehenden Ansprüche,
**dadurch gekennzeichnet, dass**
die Anzeigeeinrichtung (12) mittels einer Hinterhakung oder mittels einer magnetischen Aufnahme oder mittels eines Klettverschlusses arretierbar ist.

6. Kraftfahrzeug (50) nach Anspruch 2,
**dadurch gekennzeichnet, dass**
das erste Verstauelement (34) der Verstaueinheit (16) und/oder das zweite Verstauelement (36) der Verstaueinheit (16) lösbar an der Halteeinheit (42) gehalten ist und die Anzeigeeinrichtung (12) derart flexibel ausgestaltet ist, dass der ausgefahrene Nutzbereich (24) bei abgelöstem Verstauelement (34, 36) zerstörungsfrei verdrillbar ist.

7. Verfahren zum Betreiben einer Vorrichtung (10) eines Kraftfahrzeugs (50) nach einem der Ansprüche 1 bis 6, wobei die Recheneinrichtung (14) die Darstellung der Objekte (46, 48) in Abhängigkeit von dem aktuellen Längenwert (30,32) der Gebrauchsstrecke (S) einstellt,
**dadurch gekennzeichnet, dass**
der ausgefahrene Nutzbereich (24) der Anzeigeeinrichtung (12) in jeder der Gebrauchsstellungen (26, 28) entlang einer der Anzeigeeinrichtung (12) zugewandten Kontur (44) der Halteeinheit (42) ausgerichtet wird.

8. Verfahren nach Anspruch 7,
**dadurch gekennzeichnet, dass**
die Recheneinrichtung (14) ein Format der Darstellung in Abhängigkeit von dem aktuellen Längenwert (30, 32) der Gebrauchsstrecke (S) einstellt.

## Claims

1. Motor vehicle (50) having a device (10) for arrangement in the motor vehicle (50), wherein the device (10) includes
- a display device (12) designed to display objects (46, 48),
- a computing device (14) for controlling the display device (12), and
- a stowage unit (16), in which a first end region (18) of the display device (12) is inserted, the entire display device (12) being inserted in the stowage unit (16) in a stowage position (22) of the display device (12), and a useful region (24) of the display device (12) being extendable out of the stowage unit (16), starting from the stowage position (22), by a predeterminable use distance (S), wherein
the display device (12) can be locked at different length values (30, 32) of the use distance (S), resulting in a plurality of different use positions (26, 28), and the computing device (14) is designed to adjust the display of the objects (46, 48) based on the current length value (30, 32) of the use distance (S), wherein the device (10) is mounted on a holding unit (42) of the motor vehicle (50) and the device (10) is mounted on the holding unit (42) so as to be movable relative to the holding unit (42),
**characterised in that**
the extended useful region (24) of the display device (12) is aligned in each of the use positions (26, 28) along a contour (44) of the holding unit (42) facing the display device (12), a curvature of the useful region (24) being adapted to a contour curvature of the contour (44) of the holding unit (42).

2. Motor vehicle (50) according to claim 1,
**characterised in that**
the stowage unit (16) comprises
- a first stowage element (34), into which the first end region (18) of the display device (12) is inserted at least in regions, and
- a second stowage element (36), in which a second end region (20) of the display device (12) opposite the first end region (18) is inserted
- and the two stowage elements (34, 36) can be moved apart to extend the useful area (24).

3. Motor vehicle (50) according to claim 2,
**characterised in that**
the first end region (18) and/or the second end region (20) is mounted as a respective free end of the display device (12) in the respective stowage element (34, 36).

4. Motor vehicle (50) according to any of the preceding claims,
**characterised in that**
the display device (12) is designed flexibly and is inserted in the stowage unit (16) in a curved manner in the stowage position (22).

5. Motor vehicle (50) according to any of the preceding claims,
**characterised in that**
the display device (12) can be locked by means of a rear hook or by means of a magnetic holder or by means of a Velcro fastener.

6. Motor vehicle (50) according to claim 2,
**characterised in that**
the first stowage element (34) of the stowage unit (16) and/or the second stowage element (36) of the stowage unit (16) is releasably held on the holding unit (42) and the display device (12) is designed flexibly so that the extended useful region (24) can be twisted non-destructively when the stowage element (34, 36) is detached.

7. Method for operating a device (10) of a motor vehicle (50) according to any of claims 1 to 6, wherein the computing device (14) adjusts the display of the objects (46, 48) based on the current length value (30, 32) of the use distance (S),
**characterised in that**
the extended useful region (24) of the display device (12) is aligned in each of the use positions (26, 28) along a contour (44) of the holding unit (42) facing the display device (12).

8. Method according to claim 7,
**characterised in that**
the computing device (14) adjusts a format of the display based on the current length value (30, 32) of the use distance (S).

## Revendications

1. Véhicule automobile (50) avec un dispositif (10) destiné à être disposé dans le véhicule automobile (50), dans lequel le dispositif (10)
- présente un système d'affichage (12) réalisé pour représenter des objets (46, 48),
- présente un système de calcul (14) servant à commander le système d'affichage (12), et
- présente une unité de rangement (16), dans laquelle une première zone d'extrémité (18) du système d'affichage (12) est introduite, dans lequel l'ensemble du système d'affichage (12) est introduit dans l'unité de rangement (16) dans une position de rangement (22) du système d'affichage (12) et, en partant de la position de rangement (22), une zone utile (24) du système d'affichage (12) peut être déployée hors de l'unité de rangement (16) d'une distance d'utilisation (S) pouvant être spécifiée, dans lequel
le système d'affichage (12) peut être bloqué pour différentes valeurs de longueur (30, 32) de la distance d'utilisation (S) de sorte qu'il résulte une multitude de positions d'utilisation (26, 28) différentes, et le système de calcul (14) est réalisé pour régler la représentation des objets (46, 48) en fonction de la valeur de longueur (30, 32) instantanée de la distance d'utilisation (S), dans lequel le dispositif (10) est logé au niveau d'une unité de maintien (42) du véhicule automobile (50) et le dispositif (10) est logé au niveau de l'unité de maintien (42) de manière à pouvoir être déplacé par rapport à celle-ci,
**caractérisé en ce que**
la zone utile (24) déployée du système d'affichage (12) est orientée dans chacune des positions d'utilisation (26, 28) le long d'un contour (44), tourné vers le système d'affichage (12), de l'unité de maintien (42), dans lequel une incurvation de la zone utile (24) est adaptée à une incurvation de contour du contour (44) de l'unité de maintien (42).

2. Véhicule automobile (50) selon la revendication 1,
**caractérisé en ce que**
l'unité de rangement (16) comprend
- un premier élément de rangement (34), dans lequel la première zone d'extrémité (18) du système d'affichage (12) est introduite au moins par endroits, et
- un deuxième élément de rangement (36), dans lequel une deuxième zone d'extrémité (20), faisant face à la première zone d'extrémité (18), du système d'affichage (12) est introduite,
- et pour déployer la zone utile (24), les deux éléments de rangement (34, 36) peuvent être déplacés de manière à s'écarter l'un de l'autre.

3. Véhicule automobile (50) selon la revendication 2,
**caractérisé en ce que**
la première zone d'extrémité (18) et/ou la deuxième zone d'extrémité (20) sont logées en tant qu'extrémité libre respective du système d'affichage (12) dans l'élément de rangement (34, 36) respectif.

4. Véhicule automobile (50) selon l'une quelconque des revendications précédentes,
**caractérisé en ce que**
le système d'affichage (12) est réalisé de manière flexible et introduit dans la position de rangement (22) de manière incurvée dans l'unité de rangement (16).

5. Véhicule automobile (50) selon l'une quelconque des revendications précédentes,
**caractérisé en ce que**
le système d'affichage (12) peut être bloqué au moyen d'un système d'accrochage arrière ou au moyen d'un logement magnétique ou au moyen d'une fermeture autoagrippante.

6. Véhicule automobile (50) selon la revendication 2,
**caractérisé en ce que**
le premier élément de rangement (34) de l'unité de rangement (16) et/ou le deuxième élément de rangement (36) de l'unité de rangement (16) sont maintenus de manière amovible au niveau de l'unité de maintien (42) et le système d'affichage (12) est configuré de manière flexible de telle manière que la zone utile (24) déployée peut être tordue sans destruction lorsque l'élément de rangement (34, 36) est détaché.

7. Procédé servant à faire fonctionner un dispositif (10) d'un véhicule automobile (50) selon l'une quelconque des revendications 1 à 6, dans lequel le système de calcul (14) règle la représentation des objets (46, 48) en fonction de la valeur de longueur (30, 32) instantanée de la distance d'utilisation (S),
**caractérisé en ce que**
la zone utile (24) déployée du système d'affichage (12) est orientée dans chacune des positions d'utilisation (26, 28) le long d'un contour (44), tourné vers le système d'affichage (12), de l'unité de maintien (42).

8. Procédé selon la revendication 7,
**caractérisé en ce que**
le système de calcul (14) règle un format de la représentation en fonction de la valeur de longueur (30, 32) instantanée de la distance d'utilisation (S).
